# EUROPÄISCHE PATENTSCHRIFT

(11) **EP 2 676 315 B1**
(45) Veröffentlichungstag und Bekanntmachung des Hinweises auf die Patenterteilung: **14.08.2019**
(21) Anmeldenummer: 11802896.8
(22) Anmeldetag: 16.12.2011
(51) Int. Cl.: H01M 4/38, H01M 4/134, H01M 10/0565, H01M 10/052, H01M 10/0567, H01M 10/0569, H01M 4/136, H01M 2/16

(54) **POLYMER-IONOPHOR-SEPARATOR**
POLYMER-IONOPHORE SEPARATOR
SÉPARATEUR POLYMÈRE-IONOPHORE

(30) Priorität: 15.02.2011 DE 102011004094
(43) Veröffentlichungstag der Anmeldung: 25.12.2013
(73) Patentinhaber: Robert Bosch GmbH, 70442 Stuttgart (DE)
(72) Erfinder: HASENKOX, Ulrich, 71254 Ditzingen (DE)
(86) Internationale Anmeldenummer: PCT/EP2011/073009
(87) Internationale Veröffentlichungsnummer: WO 2012/110140

(56) Entgegenhaltungen:
- EP-A2- 0 854 527
- JP-A- 2002 237 285
- US-A1- 2005 074 675
- US-A1- 2005 175 903
- HENG L Y ET AL: "One-step synthesis of K+ -selective methacrylic-acrylic copolymers containing grafted ionophore and requiring no plasticier", ELECTROANALYSIS, VHC PUBLISHERS, INC, US, Bd. 12, Nr. 3, 1. Januar 2000 (2000-01-01) , Seiten 178-186, XP008087020, ISSN: 1040-0397, DOI: 10.1002/(SICI)1521-4109(200002)12:3<178::A ID-ELAN178>3.0.CO;2-Z
- KAPLAN M L ET AL: "Crown ether enhancement of ionic conductivity in a polymer-salt system", SOLID STATE IONICS, NORTH HOLLAND PUB. COMPANY. AMSTERDAM; NL, NL, vol. 25, no. 1, 1 October 1987 (1987-10-01), pages 37-40, XP024643534, ISSN: 0167-2738, DOI: 10.1016/0167-2738(87)90175-5 [retrieved on 1987-10-01]
- ANDREI M ET AL: "Polymer electrolytes based on poly-phosphazene with pendant 12-crown-4 groups and monovalent salts", ELECTROCHIMICA ACTA, ELSEVIER SCIENCE PUBLISHERS, BARKING, GB, vol. 37, no. 9, 1 January 1992 (1992-01-01), pages 1545-1549, XP026516879, ISSN: 0013-4686, DOI: 10.1016/0013-4686(92)80108-X [retrieved on 1992-01-01]
- DARMASENA PARAMUNAGE ET AL: "Poly(crown ether): A potential candidate for Solid-State Electrolytes", MACROMOLECULES, AMERICAN CHEMICAL SOCIETY, US, vol. 22, 1 January 1989 (1989-01-01), pages 2845-2849, XP002086268, ISSN: 0024-9297, DOI: 10.1021/MA00196A053

## Beschreibung

Die vorliegende Erfindung betrifft eine Alkali-Chalkogen-Zelle und einen Separator für eine Alkali-Chalkogen-Zelle.

### Stand der Technik

Lithium-Schwefel-Batterien (Li-S-Batterien) bieten gegenüber herkömmlichen Lithium-Ionen-Zellen den Vorteil einer deutlich höheren Energiedichte. Das Lithium-Schwefel-System liefert eine theoretische Energiedichte von 2600 Wh/kg (nur auf das aktive Material bezogen), was ein Mehrfaches der mit Lithium-Ionen-Technologien erreichbaren Energiedichte von ca. 580 Wh/kg darstellt.

Bisher werden bei Lithium-Schwefel-Zellen meist aus der konventionellen Lithium-Ionen-Technik bekannte mikroporöse Polymermembranen oder Gelmembranen als Separatoren eingesetzt. Durch diese diffundiert das im Elektrolytlösungsmittel gelöste Leitsalz zwischen den Elektroden hin und her. Ebenso ist auch die Diffusion des Lösungsmittels sowie aller darin gelösten Verbindungen zwischen Kathoden- und Anodenraum möglich.

US 2005/0175903 A1 offenbart eine Lithium-Schwefel Batterie, umfassend eine positive Elektrode mit einer auf einem leitfähigen Substrat gebildeten Schicht des Positiv-Aktivmaterials, und einem auf dieser Positiv-Aktivmaterial-Schicht gebildeten Polymerfilm, wobei die Poren des Positiv-Aktivmaterials mit einem den nichtwässrigen Elektrolyt beinhaltenden Polymer gefüllt sind, und auch der zuvor genannte Polymerfilm aus diesem Polymer und dem nichtwässrigem Elektrolyt besteht. Diese Lithium-Schwefel Batterie zeigt eine verbesserte Nutzung des Positiv-Aktivmaterials, verbunden mit einer verbesserten Zyklenfestigkeit und einer verbesserten Kapazität sowie einer verminderten Schwellung der positiven Elektrode der Lithium-Schwefel-Batterie.

JP2002-237285 offenbart einen Separator aus einem mikroporösen Polymer, welcher auf einer oder beiden Seiten einen dünnen Film aufweist, wobei dieser dünne Film Kronenether enthält.

### Offenbarung der Erfindung

Gegenstand der vorliegenden Erfindung ist eine Alkali-Chalkogen-Zelle, insbesondere Lithium-Schwefel-Zelle, welche eine Anode (negative Elektrode), eine Kathode (positive Elektrode) und einen zwischen der Anode und der Kathode angeordneten Separator umfasst. Die Anode umfasst dabei ein Alkalimetall, insbesondere Lithium, wobei die Kathode ein Chalkogen, insbesondere Schwefel, umfasst.

Erfindungsgemäß weist der Separator eine Polymer-Ionophor-Komponente auf, welche ein polymeres Matrixmaterial und Alkali-Ionophore, insbesondere Lithiumlonophore, umfasst. Dabei sind die Alkali-Ionophore beziehungsweise Lithiumlonophore insbesondere chemisch und/oder physikalisch, insbesondere kovalent, an das Matrixmaterial und/oder in dem Matrixmaterial gebunden. Die Alkali-Ionophore können dabei sowohl Moleküle einer lonophorart als auch Moleküle unterschiedlicher lonophorarten sein.

Durch eine derartige selektiv Alkaliionen, insbesondere Lithiumionen, leitende Komponente kann vorteilhafterweise die Stabilität und Lebensdauer von Lithium-Chalkogen-Zellen erhöht werden. Dies liegt darin begründet, dass durch die Polymer-Ionophor-Komponente die Diffusion löslicher Zwischenprodukte bei der Ladung/Entladung der Zelle, beispielsweise von Polysulfiden, in den Separator oder Anodenraum verhindert werden kann. Dadurch kann wiederum vorteilhafterweise der Entzug von Aktivmaterial, beispielsweise Polysulfide, von der elektrochemischen Reaktion verringert werden, was mit einer Verbesserung der Kapazität und Zyklenstabilität der Zelle einhergeht. Auch können Polymer-Ionophor-Komponenten vorteilhafterweise eine hohe lonenleitfähigkeit aufweisen. Zudem können Polymer-Ionophor-Komponenten Vorteile bezüglich der Flexibilität und Verarbeitbarkeit aufweisen.

Im Rahmen einer Ausführungsform ist die Polymer-Ionophor-Komponente eine Polymer-Ionophor-Membran beziehungsweise in Form mindestens einer Polymer-Ionophor-Membran ausgebildet.

Aus dem Bereich der Analytik sind ionenselektive Polymer-Ionophor-Komponenten und -Membranen bekannt. Diese umfassen insbesondere ein Polymer oder Polymergemisch mit darin eingebrachten lonophoren und gegebenenfalls einem oder mehreren Lösungsmitteln. Die lonophore enthalten Gruppen, welche Metallionen selektiv komplexieren können. Die Selektivität der Gruppen für ein bestimmtes Metallion hängt hierbei von der chemischen Struktur der lonophore ab. Einige lonophore und ihre Selektivität gegenüber Alkali-Ionen sind in der Literaturstelle W. Simon, Helvetica Chimica Acta, Vol. 58, S. 1535-1548 (1975) beschrieben. Andere lonophore wurden in der Masterthesis von Charles V. Cason: "Functionalized Crown Ethers as lonophores in Ion Selective Electrode", Texas Tech University, Dezember 1986, beschrieben.

Durch Einbringen solcher lonophore in ein Polymer wird eine Polymer-Ionophor-Komponente geschaffen, welche Ionen selektiv binden und transportieren kann, da die Ionen sich von einer Bindungsstelle zur nächsten bewegen können. Da die lonophore aufgrund ihrer chemischen Struktur und Größe selektiv nur bestimmte Ionen binden und somit transportieren, ist die Polymer-Ionophor-Komponente für andere Ionen, wie Polysulfide oder auch Flüssigkeiten undurchlässig.

Der Durchmesser eines Lithiumions Li⁺ beträgt beispielsweise ca. 1,2 Å, der des Sulfidions S²⁻ ca. 3,6 Å. Die innere Kavität eines Kronenethers, wie 15-Krone-5, hat einen Durchmesser von ca. 2 Å und ist somit groß genug um Lithiumionen Li⁺, aber zu klein um Sulfidion S²⁻ passieren zu lassen.

Als polymeres Matrixmaterial eignen sich alle Polymere, die im verwendeten Elektrolytlösungsmittel unter den elektrochemischen Bedingungen beständig und nicht löslich sind. Gegebenenfalls kann es sich hierbei um vernetzte Polymere handeln. In das polymere Matrixmaterial wird das lonophor insbesondere derart eingebaut, dass dieses chemisch und/oder physikalisch, insbesondere kovalent, fest an das Polymer gebunden ist, und nicht von den Lösungsmitteln herausgelöst werden kann.

Als lonophore kommen alle Verbindungen in Frage, welche eine geeignete Komplexierungs- und Transportfunktion für Alkaliionen, insbesondere für Lithiumionen, aufweisen. In den lonophoren enthaltene Strukturmerkmale können insbesondere solche sein, welche von Kronenethern, wie 12-Krone-4, 14-Krone-4, 15-Krone-5 oder 18-Krone-6 oder von Lariat-Kronenether bekannt sind. Lariat-Kronenether können aufgrund ihrer Seitenketten zusätzliche Bindungsstellen aufweisen. Durch Auswahl der Seitenketten kann darüber hinaus die Selektivität von Lariat-Kronenether besonders gut eingestellt werden.

Ebenfalls sind als lonophore Strukturen geeignet, welche an cis-Cyclohexan-1,2-dicarboxamide angelehnt sind.

Auch können kanalbildende Strukturen, welche von Antibiotika, wie Valinomycin, bekannt sind, als lonophor dienen.

Im Rahmen einer weiteren Ausführungsform sind die Alkali-Ionophore ausgewählt aus der Gruppe bestehend aus Kronenethern und Kronenether-Derivaten, beispielsweise 12-Krone-4, 14-Krone-4, 15-Krone-5 und 18-Krone-6, insbesondere 15-Krone-5, Lariat-Kronenethern, Kryptanden, *cis*-Cyclohexan-3, 4-dicarboxamid, cis-Cyclohexan-3, 4-dicarboxamid-Derivaten, Makroliden, insbesondere Valinomycin oder Valinomycin-Derivaten, und Kombinationen davon.

Im Rahmen einer weiteren Ausführungsform umfassen oder sind die Alkali-Ionophore15-Krone-5-Kronenether oder 15-Krone-5-Kronenetherderivate.

Im Rahmen einer weiteren Ausführungsform sind die Alkali-Ionophore selektiv für Ionen eines bestimmten Alkalimetalls, insbesondere für Lithiumionen. Andersartige Ionen, wie Polysulfide, können so vorteilhafterweise nicht passieren.

Im Rahmen einer weiteren Ausführungsform umfasst die Polymer-Ionophor-Komponente, insbesondere die Polymer-Ionophor-Membran weiterhin mindestens lonophorlösungsmittel. Durch Auswahl des lonophorlösungsmittels kann die Ionenselektivität der Polymer-Ionophor-Komponente beziehungsweise Polymer-Ionophor-Membran vorteilhafterweise weiter verbessert werden. Vorzugsweise wird für das lonophorlösungsmittel ein anderes Lösungsmittel oder Losungsmittelgemisch eingesetzt als für das oder die Elektrolytlösungsmittel.

Im Rahmen einer weiteren Ausführungsform ist die Polymer-Ionophor-Komponente, insbesondere Polymer-Ionophor-Membran, undurchlässig für Elektrolytlösungsmittel.

Im Rahmen einer weiteren Ausführungsform sind die Alkali-Ionophore Lithiumionen-Ionophore.

Grundsätzlich kann der Separator vollständig aus der Polymer-Ionophor-Komponente, beispielsweise in Form einer Polymer-Ionophor-Membran, ausgebildet sein.

Es ist jedoch ebenso möglich, zusätzlich eine andere beispielsweise inerte poröse Membran zu verwenden, welche auf einer oder auf beiden Seiten mit der Polymer-Ionophor-Komponente beschichtet ist.

Im Rahmen einer weiteren Ausführungsform umfasst der Separator daher mindestens eine weitere Membran, beispielsweise eine poröse, insbesondere mikroporöse, Polymermembran, zum Beispiel auf Polyolefinbasis, oder Gelmembran, zum Beispiel auf der Basis eines in einem Elektrolytlösungsmittel gequollenen Polymers. Da die Trennwirkung auch durch eine sehr dünne Polymer-Ionophor-Membran bereits gewährleistet werden kann, kann der Rest des Separators vorteilhafterweise aus einem stabilen, preiswerten Material ausgebildet werden. Zudem wirkt sich eine dünne Barriere günstig auf die Diffusionsgeschwindigkeit der Alkaliionen, insbesondere Lithiumionen, aus.

Im Rahmen einer weiteren Ausführungsform grenzt zumindest eine Seite der weiteren Membran an die/eine Polymer-Ionophor-Komponente, insbesondere Polymer-Ionophor-Membran, an. Insbesondere kann zumindest eine Seite der weiteren Membran mit der/einer Polymer-Ionophor-Komponente, insbesondere Polymer-Ionophor-Membran, beschichtet sein. Beispielsweise kann die weitere Membran kathodenseitig oder anodenseitig an die Polymer-Ionophor-Komponente, insbesondere Polymer-Ionophor-Membran, angrenzen beziehungsweise mit der Polymer-Ionophor-Komponente, insbesondere Polymer-Ionophor-Membran, beschichtet sein. Gegebenenfalls kann die weitere Membran jedoch auch beidseitig, also kathodenseitig und anodenseitig, jeweils an eine Polymer-Ionophor-Komponente, insbesondere Polymer-Ionophor-Membran, angrenzen beziehungsweise jeweils mit einer Polymer-Ionophor-Membran beschichtet sein.

Durch eine erfindungsgemäße Polymer-Ionophor-Komponente, welche nur Alkaliionen, insbesondere Lithiumionen, transportiert, lassen sich vorteilhafterweise der Kathodenraum und der Anodenraum strikt trennen. Dies bietet zudem die Möglichkeit die Zelle mit zwei unterschiedlichen Elektrolyten, und zwar einem im Kathodenraum und den anderen im Anodenraum, zu betreiben. Durch Verwendung von zwei Elektrolyten, welche permanent getrennt sind, können vorteilhafterweise Lösungsmittel eingesetzt werden, welche für den Einsatz im jeweiligen Elektrodenraum optimiert sind, und nicht einen Kompromiss der Eigenschaften darstellen. Ebenso könnten im Kathodenraum Lösungsmittel verwendet werden, die mit der Anode nicht kompatibel sind, und umgekehrt.

Im Rahmen einer weiteren Ausführungsform umfasst die Zelle ein anodenseitiges Elektrolytlösungsmittel und ein vom anodenseitigen unterschiedliches kathodenseitiges Elektrolytlösungsmittel.

Hinsichtlich weiterer Vorteile und Merkmale der erfindungsgemäßen Alkali-Chalkogen-Zelle wird hiermit explizit auf die Erläuterungen im Zusammenhang mit dem erfindungsgemäßen Separator, der erfindungsgemäßen Verwendung und der Figurenbeschreibung verwiesen.

Ein weiterer Gegenstand der vorliegenden Erfindung ist ein Separator für eine Alkali-Chalokogen-Zelle, insbesondere Lithium-Schwefel-Zelle, der eine Polymerlonophor-Komponente, insbesondere Polymer-Ionophor-Membran, aufweist, welche ein polymeres Matrixmaterial und Alkali-Ionophore, insbesondere Lithiumlonophore, umfasst. Dabei sind die Alkali-Ionophore beziehungsweise Lithiumlonophore insbesondere chemisch und/oder physikalisch, insbesondere kovalent, an das Matrixmaterial und/oder in dem Matrixmaterial gebunden .

Hinsichtlich weiterer Vorteile und Merkmale des erfindungsgemäßen Separators wird hiermit explizit auf die Erläuterungen im Zusammenhang mit der erfindungsgemäßen Alkali-Chalkogen-Zelle, der erfindungsgemäßen Verwendung und der Figurenbeschreibung verwiesen.

Ferner betrifft die vorliegende Erfindung die Verwendung einer Polymerlonophor-Komponente, insbesondere Polymer-Ionophor-Membran, welche ein polymeres Matrixmaterial und Alkali-Ionophore, insbesondere Lithium-Ionophore, umfasst, als Separator für eine Alkali-Chalkogen-Zelle, insbesondere Lithium-Schwefel-Zelle. Dabei sind die Alkali-Ionophore beziehungsweise Lithium-Ionophore insbesondere chemisch und/oder physikalisch, insbesondere kovalent, an das Matrixmaterial und/oder in dem Matrixmaterial gebunden.

Hinsichtlich weiterer Vorteile und Merkmale der erfindungsgemäßen Verwendung wird hiermit explizit auf die Erläuterungen im Zusammenhang mit der erfindungsgemäßen Alkali-Chalkogen-Zelle, dem erfindungsgemäßen Separator und der Figurenbeschreibung verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine erste Ausführungsform eines erfindungsgemäßen Separators mit einer Polymer-Ionophor-Membran;
- Fig. 2: einen schematischen Querschnitt durch eine zweite Ausführungsform eines erfindungsgemäßen Separators mit einer Polymer-Ionophor-Membran und einer weiteren Membran;
- Fig. 3: einen schematischen Querschnitt durch eine dritte Ausführungsform eines erfindungsgemäßen Separators mit zwei Polymer-Ionophor-Membranen und einer weiteren Membran; und
- Fig. 4: die chemische Strukturformel von 15-Krone-5-Kronenether.

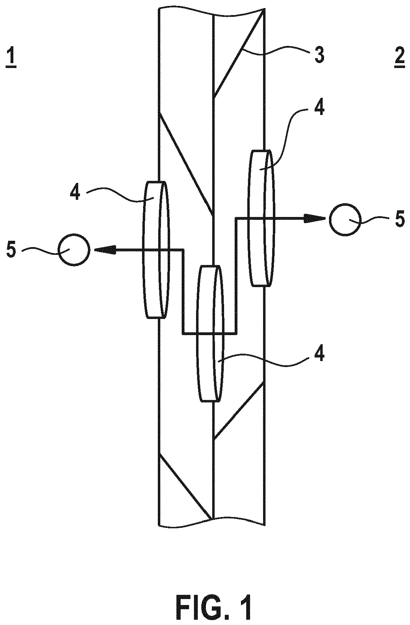

Figur 1 zeigt eine erste Ausführungsform eines erfindungsgemäßen Separators. Figur 1 zeigt, dass der Separator zwischen der Anode 1 und der Kathode 2 anordbar ist. Figur 1 illustriert, dass der Separator eine Polymer-Ionophor-Membran 3, 4 aufweist, welche ein polymeres Matrixmaterial 3 und Alkalilonophore 4 umfasst. Die Alkali-Ionophore 4 können insbesondere Lithiumlonophore sein. Figur 1 zeigt, dass die Alkali-Ionophore 4 chemisch und/oder physikalisch, insbesondere kovalent, an das Matrixmaterial 3 gebunden beziehungsweise in das Matrixmaterial 3 eingebunden sind.

Figur 1 veranschaulicht, dass die Alkali-Ionophore 4 selektiv für Ionen eines bestimmten Alkalimetalls 5, insbesondere Lithiumionen, sind. Für Elektrolytlösungsmittel ist die Polymer-Ionophor-Membran 3, 4 vorzugsweise undurchlässig. Dies ermöglicht es anodenseitig 1 ein anderes Elektrolytlösungsmittel einzusetzen als kathodenseitig 2. Dies ermöglicht es vorteilhafterweise die Elektrolytlösungsmittel speziell hinsichtlich des anodenseitigen beziehungsweise kathodenseitigen Einsatzes zu optimieren.

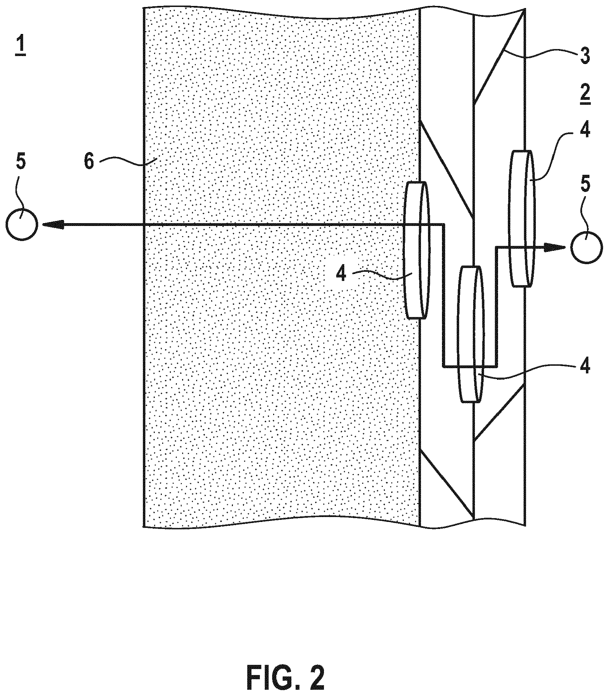

Die in Figur 2 gezeigte, zweite Ausführungsform unterscheidet sich im Wesentlichen dadurch von der in Figur 1 gezeigten ersten Ausführungsform, dass der Separator eine weitere Membran 6, beispielsweise eine poröse Membran oder Gelmembran umfasst. Figur 2 zeigt, dass diese weitere Membran 6 zumindest auf einer Seite, beispielsweise wie in Figur 2 gezeigt kathodenseitig, oder wie nicht in Figur 2 dargestellt anodenseitig, mit einer Polymer-Ionophor-Membran 3, 4 beschichtet sein kann.

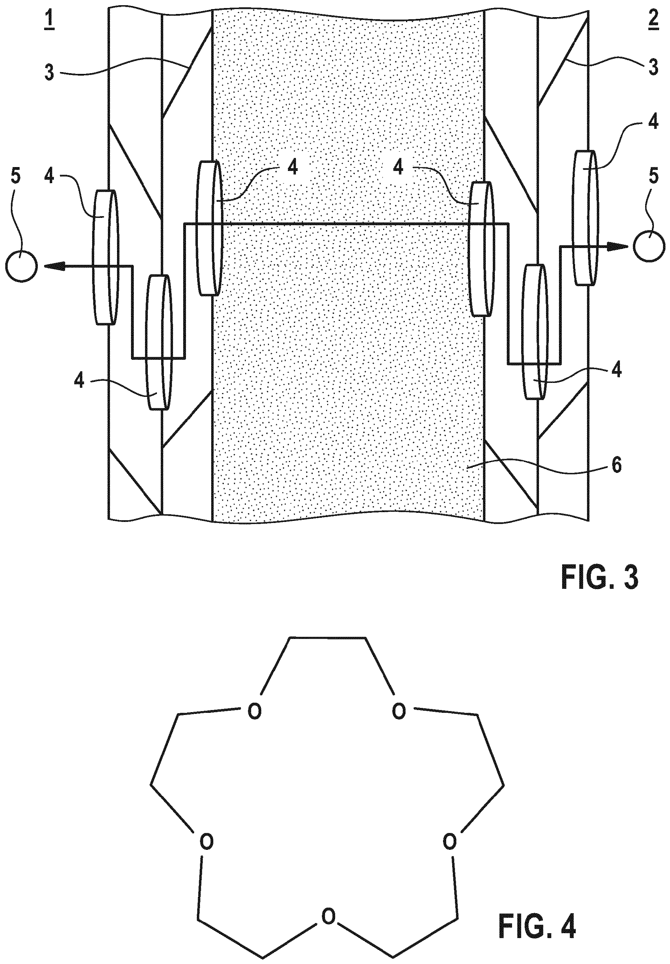

Die in Figur 3 gezeigte, dritte Ausführungsform unterscheidet sich im Wesentlichen dadurch von der in Figur 2 gezeigten zweiten Ausführungsform, dass die weitere Membran 6 kathodenseitig und anodenseitig jeweils mit einer Polymer-Ionophor-Membran 3, 4 beschichtet ist.

Die Alkali-Ionophore 4 können im Rahmen der vorliegenden Erfindung beispielsweise ausgewählt sein aus der Gruppe bestehend aus Kronenethern und Kronenether-Derivaten, Lariat-Kronenethern, Kryptanden, *cis*-Cyclohexan-3, 4-dicarboxamid, cis-Cyclohexan-3, 4-dicarboxamid-Derivaten, Makroliden, insbesondere Valinomycin oder Valinomycin-Derivaten, und Kombinationen davon.

Figur 4 zeigt die chemische Struktur eines Vertreters dieser Gruppe, nämlich 15-Krone-5-Kronenether, welcher insbesondere als lonophor für Lithiumionen geeignet ist.

## Patentansprüche

1. Alkali-Chalkogen-Zelle, umfassend
- eine Anode (1),
- eine Kathode (2) und
- einen zwischen der Anode und der Kathode angeordneten Separator, wobei die Anode ein Alkalimetall und die Kathode ein Chalkogen umfasst, dadurch charakterisiert, dass der Separator eine Polymer-Ionophor-Komponente (3, 4) aufweist, welche ein polymeres Matrixmaterial (3) und Alkali-Ionophore (4) umfasst, wobei die Alkali-Ionophore (4) chemisch und/oder physikalisch an das Matrixmaterial (3) und/oder in dem Matrixmaterial (3) gebunden sind.

2. Alkali-Chalkogen-Zelle nach Anspruch 1, wobei die Polymer-Ionophor-Komponente (3, 4) in Form mindestens einer Polymer-Ionophor-Membran (3, 4) ausgebildet ist.

3. Alkali-Chalkogen-Zelle nach Anspruch 1 oder 2, wobei die Alkali-Ionophore (4) kovalent an das Matrixmaterial (3) und/oder in dem Matrixmaterial (3) gebunden sind.

4. Alkali-Chalkogen-Zelle nach einem der Ansprüche 1 bis 3, wobei die Alkali-Ionophore (4) selektiv für Ionen eines bestimmten Alkalimetalls (5) sind.

5. Alkali-Chalkogen-Zelle nach einem der Ansprüche 1 bis 4, wobei die Polymer-Ionophor-Komponente (3, 4) undurchlässig für Elektrolytlösungsmittel ist.

6. Alkali-Chalkogen-Zelle nach einem der Ansprüche 1 bis 5, wobei die Alkali-Ionophore (4) Lithiumionen-Ionophore sind.

7. Alkali-Chalkogen-Zelle nach einem der Ansprüche 1 bis 6, wobei die Alkali-Ionophore (4) ausgewählt sind aus der Gruppe bestehend aus Kronenethern und Kronenether-Derivaten, Lariat-Kronenethern, Kryptanden, *cis-*Cyclohexan-3,4-dicarboxamid, cis-Cyclohexan-3,4-dicarboxamid-Derivaten, Makroliden und Kombinationen davon.

8. Alkali-Chalkogen-Zelle nach einem der Ansprüche 1 bis 7, wobei die Alkalilonophore (4) 15-Krone-5-Kronenether oder 15-Krone-5-Kronenetherderivate sind.

9. Alkali-Chalkogen-Zelle nach einem der Ansprüche 1 bis 8, wobei der Separator mindestens eine weitere Membran (6) umfasst.

10. Alkali-Chalkogen-Zelle nach Anspruch 9, wobei zumindest eine Seite der weiteren Membran (6) an die Polymer-Ionophor-Komponente (3, 4) angrenzt.

11. Alkali-Chalkogen-Zelle nach einem der Ansprüche 1 bis 10, wobei die Zelle ein anodenseitiges Elektrolytlösungsmittel und ein vom anodenseitigen unterschiedliches kathodenseitiges Elektrolytlösungsmittel umfasst.

12. Alkali-Chalkogen-Zelle nach einem der Ansprüche 1 bis 11, wobei die Polymer-Ionophor-Komponente (3, 4) weiterhin mindestens lonophorlösungsmittel umfasst.

13. Alkali-Chalkogen-Zelle nach einem der Ansprüche 1 bis 12, wobei die Alkali-Chalkogen-Zelle eine Lithium-Schwefel-Zelle ist.

14. Separator für eine Alkali-Chalkogen-Zelle, aufweisend eine Polymerlonophor-Membran (3, 4), welche ein polymeres Matrixmaterial (3) und Alkali-Ionophore (4) umfasst, wobei die Alkali-Ionophore (4) chemisch und/oder physikalisch an das Matrixmaterial (3) und/oder in dem Matrixmaterial (3) gebunden sind, dadurch charakterisiert, dass der Separator mindestens eine weitere Membran (6) umfasst, wobei zumindest eine Seite der weiteren Membran (6) an die Polymer-Ionophor-Membran (3, 4) angrenzt.

15. Verwendung einer Polymer-Ionophor-Komponente (3, 4), welche ein polymeres Matrixmaterial (3) und Alkali-Ionophore (4) umfasst, wobei die Alkali-Ionophore (4) chemisch und/oder physikalisch an das Matrixmaterial (3) und/oder in dem Matrixmaterial (3) gebunden sind, als Separator für eine Alkali-Chalokogen-Zelle.

## Claims

1. Alkali metal-chalcogen cell, comprising
- an anode (1),
- a cathode (2) and
- a separator arranged between the anode and the cathode, where the anode comprises an alkali metal and the cathode comprises a chalcogen, **characterized in that** the separator has a polymer-ionophore component (3, 4) which comprises a polymeric matrix material (3) and an alkali metal ionophores (4), where the alkali metal ionophores (4) are chemically and/or physically bound to the matrix material (3) and/or in the matrix material (3).

2. Alkali metal-chalcogen cell according to Claim 1, wherein the polymer-ionophore component (3, 4) is in the form of at least one polymer-ionophore membrane (3, 4).

3. Alkali metal-chalcogen cell according to Claim 1 or 2, wherein the alkali metal ionophores (4) are covalently bound to the matrix metal (3) and/or in the matrix material (3).

4. Alkali metal-chalcogen cell according to any of Claims 1 to 3, wherein the alkali metal ionophores (4) are selective for ions of a particular alkali metal (5).

5. Alkali metal-chalcogen cell according to any of Claims 1 to 4, wherein the polymer-ionophore component (3, 4) is impermeable to electrolyte solvent.

6. Alkali metal-chalcogen cell according to any of Claims 1 to 5, wherein the alkali metal ionophores (4) are lithium ion ionophores.

7. Alkali metal-chalcogen cell according to any of Claims 1 to 6, wherein the alkali metal ionophores (4) are selected from the group consisting of crown ethers and crown ether derivatives, lariat crown ethers, cryptands, cis-cyclohexane-3,4-dicarboxamide, cis-cyclohexane-3,4-dicarboxamide derivatives, macrolides and combinations thereof.

8. Alkali metal-chalcogen cell according to any of Claims 1 to 7, wherein the alkali metal ionophores (4) are 15-crown-5-crown ethers or 15-crown-5-crown ether derivatives.

9. Alkali metal-chalcogen cell according to any of Claims 1 to 8, wherein the separator comprises at least one further membrane (6).

10. Alkali metal-chalcogen cell according to Claim 9, wherein at least one side of the further membrane (6) adjoins the polymer-ionophore component (3, 4).

11. Alkali metal-chalcogen cell according to any of Claims 1 to 10, wherein the cell comprises an anode-side electrolyte solvent and a cathode-side electrolyte solvent which is different from the anode-side electrolyte solvent.

12. Alkali metal-chalcogen cell according to any of Claims 1 to 11, wherein the polymer-ionophore component (3, 4) further comprises at least one ionophore solvent.

13. Alkali metal-chalcogen cell according to any of Claims 1 to 12, wherein the alkali metal-chalcogen cell is a lithium-sulfur cell.

14. Separator for an alkali metal-chalcogen cell, having a polymer-ionophore membrane (3, 4) which comprises a polymeric matrix material (3) and alkali metal ionophores (4), where the alkali metal ionophores (4) are chemically and/or physically bound to the matrix material (3) and/or in the matrix material (3), **characterized in that** the separator comprises at least one further membrane (6), where at least one side of the further membrane (6) adjoins the polymer-ionophore membrane (3, 4).

15. Use of a polymer-ionophore component (3, 4) which comprises a polymeric matrix material (3) and alkali metal ionophores (4), wherein the alkali metal ionophores (4) are chemically and/or physically bound to the matrix material (3) and/or in the matrix material (3), as separators for an alkali metal-chalcogen cell.

## Revendications

1. Cellule de métal alcalin-chalcogène, comprenant
- une anode (1),
- une cathode (2) et
- un séparateur disposé entre l'anode et la cathode l'anode comprenant un métal alcalin et la cathode comprenant un chalcogène, **caractérisée en ce que** le séparateur présente un composant polymère-ionophore (3, 4), qui comprend un matériau de matrice polymère (3) et des métal alcalin-ionophores (4), les métal alcalin-ionophores (4) étant liés chimiquement et/ou physiquement au matériau de matrice (3) et/ou dans le matériau de matrice (3).

2. Cellule de métal alcalin-chalcogène selon la revendication 1, le composant polymère-ionophore (3, 4) étant conçu sous forme d'au moins une membrane de polymère-ionophore (3, 4).

3. Cellule de métal alcalin-chalcogène selon la revendication 1 ou 2, les métal alcalin-ionophores (4) étant liés de manière covalente au matériau de matrice (3) et/ou dans le matériau de matrice (3).

4. Cellule de métal alcalin-chalcogène selon l'une quelconque des revendications 1 à 3, les métal alcalin-ionophores (4) étant sélectifs pour les ions d'un métal alcalin déterminé (5).

5. Cellule de métal alcalin-chalcogène selon l'une quelconque des revendications 1 à 4, le composant polymère-ionophore (3, 4) étant imperméable aux solvants électrolytiques.

6. Cellule de métal alcalin-chalcogène selon l'une quelconque des revendications 1 à 5, les métal alcalin-ionophores (4) étant des ions de lithium-ionophores.

7. Cellule de métal alcalin-chalcogène selon l'une quelconque des revendications 1 à 6, les métal alcalin-ionophores (4) étant choisis dans le groupe constitué par les éthers couronne et les dérivés d'éther couronne, les lariat-éthers couronne, les cryptands, le cis-cyclohexane-3,4-dicarboxamide, les dérivés de cis-cyclohexane-3,4-dicarboxamide, les macrolides et les combinaisons correspondantes.

8. Cellule de métal alcalin-chalcogène selon l'une quelconque des revendications 1 à 7, les métal alcalin-ionophores (4) étant des éthers 15-couronne-5-couronne ou des dérivés d'éther 15-couronne-5-couronne.

9. Cellule de métal alcalin-chalcogène selon l'une quelconque des revendications 1 à 8, le séparateur comprenant au moins une autre membrane (6).

10. Cellule de métal alcalin-chalcogène selon la revendication 9, au moins un côté de l'autre membrane (6) étant adjacent au composant de polymère-ionophore (3, 4).

11. Cellule de métal alcalin-chalcogène selon l'une quelconque des revendications 1 à 10, la cellule comprenant un solvant électrolytique côté anode et un solvant électrolytique côté cathode différent de celui du côté anode.

12. Cellule de métal alcalin-chalcogène selon l'une quelconque des revendications 1 à 11, le composant de polymère-ionophore (3, 4) comprenant en outre au moins un solvant d'ionophore.

13. Cellule de métal alcalin-chalcogène selon l'une quelconque des revendications 1 à 12, la cellule de métal alcalin-chalcogène étant une cellule de lithium-soufre.

14. Séparateur pour une cellule de métal alcalin-chalcogène, présentant une membrane de polymère-ionophore (3, 4), qui comprend un matériau de matrice (3) et des métal alcalin-ionophores (4), les métal alcalin-ionophores (4) étant liés chimiquement et/ou physiquement au matériau de matrice (3) et/ou dans le matériau de matrice (3), **caractérisé en ce que** le séparateur comprend au moins une autre membrane (6), au moins un côté de l'autre membrane (6) étant adjacent à la matrice de polymère-ionophore (3, 4).

15. Utilisation d'un composant polymère-ionophore (3, 4), qui comprend un matériau de matrice polymère (3) et des métal alcalin-ionophores (4), les métal alcalin-ionophores (4) étant liés chimiquement et/ou physiquement au matériau de matrice (3) et/ou dans le matériau de matrice (3), comme séparateur pour une cellule de métal alcalin-chalcogène.
